# FASCICULE DE BREVET EUROPEEN

(11) **EP 1 376 798 B1**
(45) Date de publication et mention de la délivrance du brevet: **05.10.2005**
(21) Numéro de dépôt: 03291528.2
(22) Date de dépôt: 23.06.2003
(51) Int. Cl.: H02G 3/04

(54) **Support de conduits en treillis**
Leitungsführungsgitterkanal
Conduit meshsupport

(30) Priorité: 26.06.2002 FR 0207929
(43) Date de publication de la demande: 02.01.2004
(73) Titulaire: Société de Constructions Electriques de la Seine ( CES), 92130 Issy-les-Moulineaux (FR)
(72) Inventeur: Dufourg Pierre-Stéphane, 75014 Paris (FR)
(74) Mandataire: Burbaud, Eric

(56) Documents cités:
- EP-A- 0 390 668
- EP-A- 1 206 020

## Description

La présente invention est relative aux supports de conduits en treillis.

Plus particulièrement, l'invention concerne un support de conduits s'étendant longitudinalement selon une première direction et comprenant au moins une section sensiblement en forme de U qui présente un fond et deux ailes latérales, ledit support de conduits délimitant un volume intérieur adapté pour recevoir des conduits souples ou semi-rigides (câbles, tuyaux ou autres) qui s'étendent longitudinalement selon la première direction, ledit support de conduits comprenant des fils de chaîne rigides qui s'étendent sensiblement parallèlement à la première direction et des fils de trame rigides qui s'étendent sensiblement perpendiculairement à la première direction, les fils de trame étant fixés sur les fils de chaîne du côté du volume intérieur du support de conduits, et chaque fil de trame comprenant un tronçon de base qui appartient au fond du support de conduits et deux branches latérales qui appartiennent respectivement aux ailes latérales du support de conduits.

Le document US-A-5 062 605 décrit un exemple de support en treillis de ce type.

Ces supports en treillis connus présentent l'avantage que les fils de trame, qui reprennent au moins partiellement le poids des conduits installés dans le support, sont disposés au-dessus des fils de chaîne et sont donc efficacement supportés par ceux-ci, les fils de chaîne étant par ailleurs soutenus par des consoles, étriers ou autres organes de support.

Les supports en treillis connus de ce type présentent toutefois l'inconvénient que les conduits contenus dans le support de conduits subissent des déformations aux endroits où ils croisent les fils de trame, sous l'effet de leur propre poids et/ou sous l'effet de la pression exercée par des colliers de serrage qui solidarisent lesdits conduits avec le support en treillis.

Ces déformations des conduits contenus dans le support en treillis sont nuisibles à la fois pour la durée de vie et les performances de ces conduits et pour une utilisation optimale de l'espace disponible à l'intérieur du support en treillis.

Par ailleurs, EP-A1-0 390 668 divulgue un chemin de câbles constitué par un treillis plié en U composé d'éléments allongés et rigides, croisés à angle- droit et assemblés en leurs points de croisement. Les éléments rigides longitudinaux sont des fils ronds et les éléments rigides transversaux sont des bandes plates.

EP-A1-1 206 020 divulgue un chemin de câbles en treillis en U comprenant des fils longilignes soudés sur des fils transversaux. Au moins un fil, situé sur une paroi latérale du chemin de câbles, est plié en onde. En revanche, les fils longitudinaux appartenant au fond du chemin de câbles sont longilignes.

La présente invention a notamment pour but de pallier les inconvénients susmentionnés.

A cet effet, selon l'invention, un support de conduits en treillis du genre en question est caractérisé en ce qu'au moins les fils de chaîne appartenant au fond du support de conduits comprennent chacun une succession de tronçons longitudinaux reliés entre eux par des pliures faisant saillie à l'opposé du volume intérieur du support de conduits, les pliures des fils de chaîne étant disposées pour recevoir les tronçons de base des fils de trame et étant dimensionnées pour que lesdits tronçons de base des fils de trame et les tronçons longitudinaux des fils de chaîne soient disposés sensiblement au même niveau.

Grâce à ces dispositions, les conduits disposés dans le support en treillis peuvent reposer sensiblement à plat sur le fond dudit support en treillis, de sorte qu'on diminue nettement les déformations locales subies par lesdits conduits lorsqu'ils reposent dans le support en treillis.

Par ailleurs, pour une même capacité du support de conduits, l'invention permet un gain en hauteur égal au diamètre des fils de trame, puisqu'il est possible de faire supporter les fils de chaîne par des organes de support disposés entre les fils de trame. A titre d'exemple, avec des diamètres de fils de trame compris entre 4 et 5 mm et des hauteurs d'ailes comprises entre 35 et 50 mm, on peut ainsi obtenir un gain en hauteur compris entre 8 et 15% par rapport aux supports de conduits en treillis de l'art antérieur.

Enfin, lorsque le fond du support de conduits repose contre une paroi ou sur le sol, la fixation des conduits par des colliers, qui sont généralement passés autour des fils de chaîne, est facilitée par l'espace qui est ménagé par les pliures entre d'une part, le sol ou la paroi et d'autre part, les tronçons longitudinaux des fils de chaîne.

Dans des modes de réalisation préférés de l'invention, on peut avoir recours en outre à l'une et/ou à l'autre des dispositions suivantes :
- les tronçons longitudinaux des fils de chaîne sont rectilignes et parallèles à la première direction ;
- les tronçons de base des fils de trame et les tronçons longitudinaux des fils de chaîne sont disposés sensiblement dans un même plan ;
- les pliures des fils de chaîne ont chacune une largeur, mesurée dans la première direction, qui correspond sensiblement à l'épaisseur d'un fil de trame ;
- les pliures des fils de chaîne ont chacune une largeur, mesurée dans la première direction, qui est supérieure à l'épaisseur d'un fil de trame ;
- les pliures des fils de chaîne ont chacune un fond plat.

D'autres avantages de l'invention apparaîtront au cours de la description détaillée suivante de deux de ces formes de réalisation, données à titre d'exemples non limitatifs, en regard des dessins joints.

Sur les dessins :
- la figure 1 est une vue en perspective d'une partie d'un support de conduits en treillis selon une forme de réalisation de l'invention,
- la figure 2 est une vue en coupe longitudinale du support de la figure 1,
- et la figure 3 est une vue similaire à la figure 1, pour une deuxième forme de réalisation de l'invention.

Sur les différentes figures, les mêmes références désignent des éléments identiques ou similaires.

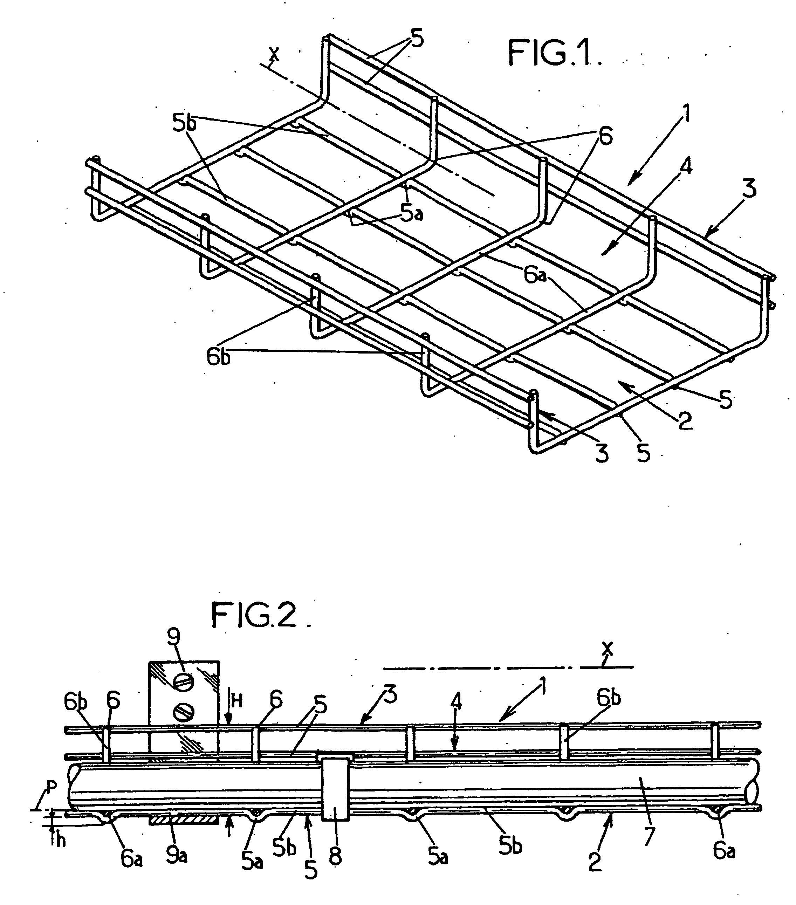

Comme représenté sur la figure 1, l'invention concerne un support de conduits 1 qui est plus particulièrement destiné à être utilisé comme chemin de câbles, mais qui pourrait supporter tous autres conduits (tuyaux ou autres) souples ou semi-rigides.

Le support de conduits 1 s'étend longitudinalement selon une direction X qui, dans l'exemple représenté, est une direction rectiligne généralement horizontale, mais la direction X pourrait le cas échéant être curviligne et/ou non horizontale.

Dans l'exemple représenté, le support de conduits 1 présente une section sensiblement en forme de U, avec un fond 2 et deux ailes latérales 3. D'une façon plus générale, le support de conduits 1 pourrait comprendre une telle section en forme de U complétée par d'autres parois, par exemple une paroi de couverture (non représentée) recouvrant partiellement le fond 2 et prolongeant l'extrémité libre d'au moins une des ailes latérales 3.

Le fond 2 et les ailes 3 du support de conduits 1 délimitent un volume intérieur 4 adapté pour recevoir les câbles ou autres conduits susmentionnés, s'étendant longitudinalement dans la direction X.

Le support de conduits 1 est constitué par un treillis de fils rigides à section circulaire ou non, généralement métalliques, qui sont assemblés entre eux par tout moyen connu, notamment pat soudage.

Ces fils rigides comprennent :
- des fils de chaîne rigides 5 qui s'étendent sensiblement dans la direction longitudinale X (les fils de chaîne peuvent être strictement parallèles à la direction X, ou encore, ces fils de chaîne peuvent être par exemple ondulés en s'étendant dans la direction générale X),
- et des fils de trame rigides 6 qui s'étendent sensiblement perpendiculairement à la direction longitudinale X, chaque fil de trame 6 étant fixé aux fils de chaîne 5 du côté du volume intérieur 4.

Chaque fil de trame 6 comprend d'une part, un tronçon de base 6a appartenant au fond 2 du support de conduits 1, et d'autre part, deux branches latérales 6b qui sont disposées verticalement dans l'exemple représenté et qui appartiennent aux ailes latérales 3 du support de conduits 1.

Comme on peut le voir sur les figures 1 et 2, au moins les fils de chaîne 5 appartenant au fond 2 du support de conduits comprennent chacun une pliure 5a au niveau de leur croisement avec les tronçons de base 6a, lesdites pliures 5a étant reliées entre elles par des tronçons longitudinaux 5b qui dans l'exemple représenté sont rectilignes et parallèles à la direction longitudinale X.

Les pliures 5a, qui font saillie à l'opposé du volume intérieur 4 du support de conduits, sont dimensionnées de façon que les tronçons de base 6a des fils de trame soient disposées sensiblement au même niveau que les tronçons longitudinaux 5b des fils de chaîne.

Plus particulièrement, les pliures 5a sont dimensionnées de façon que la génératrice supérieure des tronçons de base 6a soit alignée avec la génératrice supérieure des tronçons longitudinaux 5b.

Ainsi, lorsqu'un câble 7 ou autre conduit est disposé contre le fond 2 du support de conduit 1, ce câble 7 peut reposer parfaitement à plat sans être déformé localement à son passage au-dessus des fils de trame 6, même au voisinage d'un collier de serrage 8 solidarisant ce câble 7 avec l'un des fils de chaîne 5.

Comme expliqué ci-dessus, on évite de cette façon une usure prématurée du câble 7 ou une perte de performance de ce câble (notamment s'il s'agit d'un câble servant à la transmission de données à relativement haut débit), et on optimise également l'utilisation de l'espace intérieur 4 du support de conduits 1.

De plus, lorsque le fond 2 du support de conduits repose sur le sol ou contre une autre paroi, les pliures 5a ménagent un espace libre h correspondant à l'épaisseur d'un fil de chaîne 5 (par exemple 4 à 5 mm) au-dessous des tronçons longitudinaux 5b des fils de chaîne, ce qui permet alors de passer des colliers de serrage 8 sous lesdits tronçons longitudinaux 5b dans de relativement bonnes conditions.

Enfin, comme représenté sur la figure 2, il est possible de faire soutenir le support de conduits 1 par des organes de support 9 tels que des étriers ou similaires dont la branche horizontale inférieure 9a soutient les fils de chaîne 5 appartenant au fond 2, au niveau des tronçons longitudinaux 5b des fils de chaîne, c'est-à-dire entre deux fils de trame 6.

Ainsi, la hauteur H occupée par le support de conduits 1 au-dessus de la branche inférieure 9a de l'organe de support, est réduite de l'épaisseur d'un fil de trame (généralement environ 4 à 5 mm), à capacité égale.

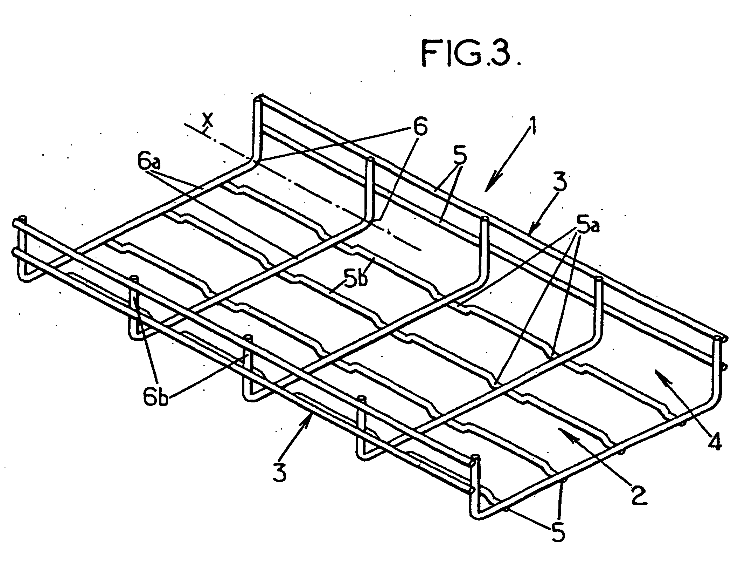

Le deuxième mode de réalisation de l'invention, représenté sur la figure 3, est similaire au premier mode de réalisation décrit précédemment, et ne sera donc pas décrit en détail.

Contrairement au premier mode de réalisation ou les pliures 5a des fils de chaîne avaient une largeur, dans le sens de la direction X, correspondant sensiblement à l'épaisseur d'un fil de trame 6 (autrement dit, un seul fil de trame 6 loge dans chaque pliure 5a), les pliures 5a du deuxième mode de réalisation sont plus larges dans le sens de la direction X. Avantageusement, la largeur desdites pliures est supérieure à deux fois l'épaisseur d'un fil de trame 6 et lesdites pliures présentent un fond plat, ce qui peut le cas échéant faciliter l'assemblage des fils de trame 6 sur les fils de chaîne 5 en augmentant les tolérances de fabrication acceptables.

## Revendications

1. Support de conduits s'étendant longitudinalement selon une première direction (X) et comprenant au moins une section sensiblement en forme de U qui présente un fond (2) et deux ailes latérales (3), ledit support de conduits délimitant un volume intérieur (4) adapté pour recevoir des conduits (7) qui s'étendent longitudinalement selon la première direction (X), ledit support de conduits comprenant des fils de chaîne rigides (5) qui s'étendent sensiblement parallèlement à la première direction (X) et des fils de trame rigides (6) qui s'étendent sensiblement perpendiculairement à la première direction (X), les fils de trame (6) étant fixés sur les fils de chaîne (5) du côté du volume intérieur (4) du support de conduits, et chaque fil de trame (6) comprenant un tronçon de base (6a) qui appartient au fond (2) du support de conduits et deux branches latérales qui appartiennent respectivement aux ailes latérales du support de conduits,
**caractérisé en ce qu'**au moins les fils de chaîne (5) appartenant au fond (2) du support de conduits comprennent chacun une succession de tronçons longitudinaux (5b) reliés entre eux par des pliures (5a) faisant saillie à l'opposé du volume intérieur (4) du support de conduits, les pliures (5a) des fils de chaîne étant disposées pour recevoir les tronçons de base (6a) des fils de trame et étant dimensionnées pour que lesdits tronçons de base (6a) des fils de trame et les tronçons longitudinaux (5b) des fils de chaîne soient disposés sensiblement au même niveau.

2. Support de conduits selon la revendication 1, dans lequel les tronçons longitudinaux (5b) des fils de chaîne sont rectilignes et parallèles à la première direction (X) .

3. Support de conduits selon la revendication 1 ou la revendication 2, dans lequel les tronçons de base (6a) des fils de trame et les tronçons longitudinaux (5b) des fils de chaîne sont disposés sensiblement dans un même plan (P).

4. Support de conduits selon l'une quelconque des revendications précédentes, dans lequel les pliures (5a) des fils de chaîne ont chacune une largeur, mesurée dans la première direction (X), qui correspond sensiblement à l'épaisseur d'un fil de trame (6).

5. Support de conduits selon l'une quelconque des revendications 1 à 3, dans lequel les pliures (5a) des fils de chaîne ont chacune une largeur, mesurée dans la première direction (X), qui est supérieure à deux fois l'épaisseur d'un fil de trame (6).

6. Support de conduits selon la revendication 5, dans lequel les pliures (5a) des fils de chaîne ont chacune un fond plat.

## Patentansprüche

1. Leitungsträger, der sich longitudinal in einer ersten Richtung (X) erstreckt und wenigstens einen im wesentlichen U-förmigen Querschnitt mit einem Boden (2) und zwei seitlichen Schenkeln (3) aufweist, wobei der Leitungsträger einen Innenraum (4) begrenzt, der eingerichtet ist, um Leitungen (7) aufzunehmen, die sich longitudinal in der ersten Richtung (X) erstrecken, wobei der Leitungsträger starre Kettdrähte (5), die sich im wesentlichen parallel zu der ersten Richtung (X) erstrecken, und starre Schussdrähte (6) umfasst, die sich im wesentlichen senkrecht zu der ersten Richtung (X) erstrecken, wobei die Schussdrähte an den Kettdrähten (5) auf Seiten des Innenraums (4) des Leitungsträgers befestigt sind, und jeder Schussdraht (6) einen Basisabschnitt (6a), der zu dem Boden (2) des Leitungsträgers gehört, und zwei seitliche Zweige, die jeweils zu den seitlichen Schenkeln des Leitungsträgers gehören, umfasst, **dadurch gekennzeichnet, dass** wenigstens die zu dem Boden (2) des Leitungsträgers gehörenden Kettdrähte (5) jeweils eine Abfolge von longitudinalen Abschnitten (5b) umfassen, die untereinander durch Biegungen (5a) verbunden sind, die entgegengesetzt zum Innenraum (4) des Leitungsträgers vorspringen, wobei die Biegungen (5a) der Kettdrähte angeordnet sind, um die Basisabschnitte (6a) der Schussdrähte aufzunehmen und bemessen sind, damit die Basisabschnitte (6a) der Schussdrähte und die Längsabschnitte (5b) der Kettdrähte im wesentlichen auf gleichem Niveau angeordnet sind.

2. Leitungsträger nach Anspruch 1, bei dem die longitudinalen Abschnitte (5b) der Kettdrähte geradlinig und parallel zu der ersten Richtung (X) sind.

3. Leitungsträger nach Anspruch 1 oder Anspruch 2, bei dem die Basisabschnitte (6a) der Schussdrähte und die longitudinalen Abschnitte (5b) der Kettdrähte im wesentlichen in einer gleichen Ebene (P) angeordnet sind.

4. Leitungsträger nach einem der beliebigen der vorhergehenden Ansprüche, bei dem die Biegungen (5a) der Kettdrähte jeweils eine in der ersten Richtung (X) gemessene Breite haben, die im wesentlichen der Dicke eines Schussdrahtes (6) entspricht.

5. Leitungsträger nach einem beliebigen der Ansprüche 1 bis 3, bei dem die Biegungen (5a) der Kettdrähte jeweils eine in der ersten Richtung (X) gemessene Breite haben, die größer als die zweifache Dicke eines Schussdrahtes (6) ist.

6. Leitungsträger nach Anspruch 5, bei dem die Biegungen (5a) der Kettdrähte jeweils einen flachen Boden haben.

## Claims

1. Trunking running longitudinally in a first direction (X) and comprising at least one substantially U-shaped section that has a bottom (2) and two lateral flanges (3), the said trunking delimiting an interior volume (4) designed to accommodate pipes or lines (7) running longitudinally in the first direction (X), the said trunking comprising rigid lengthwise wires (5) running substantially parallel to the first direction (X) and rigid crosswise wires (6) running substantially at right angles to the first direction (X), the crosswise wires (6) being fixed to the lengthwise wires (5) on the interior volume (4) side of the trunking, and each crosswise wire (6) comprising a base portion (6a) belonging to the bottom (2) of the trunking and two lateral branches belonging respectively to each lateral flange of the trunking,
**characterized in that** at least the lengthwise wires (5) belonging to the bottom (2) of the trunking each comprise a succession of longitudinal portions (5b) connected by bends (5a) protruding away from the interior volume (4) of the trunking, the bends (5a) of the lengthwise wires being designed to accommodate the base portions (6a) of the crosswise wires and being sized so that the said base portions (6a) of the crosswise wires and the longitudinal portions (5b) of the lengthwise wires lie at substantially the same level.

2. Trunking according to Claim 1, in which the longitudinal portions (5b) of the lengthwise wires are straight and parallel to the first direction (X).

3. Trunking according to Claim 1 or Claim 2, in which the base portions (6a) of the crosswise wires and the longitudinal portions (5b) of the lengthwise wires are arranged in substantially the same plane (P).

4. Trunking according to any one of the preceding claims, in which the bends (5a) of the lengthwise wires each have a width, measured in the first direction (X), that substantially corresponds to the thickness of a crosswise wire (6).

5. Trunking according to any one of Claims 1 to 3, in which the bends (5a) of the lengthwise wires each have a width, measured in the first direction (X), that is greater than twice the thickness of a crosswise wire (6).

6. Trunking according to Claim 5, in which the bends (5a) in the lengthwise wires each have a flat bottom.
